# EUROPEAN PATENT APPLICATION

(11) **EP 2 086 209 A1**
(43) Date of publication of application: **05.08.2009**
(21) Application number: 08300062.0
(22) Date of filing: 31.01.2008
(51) Int. Cl.: H04M 1/02, H05K 5/02

(54) **Connection unit**

(71) Applicant: Alcatel Lucent, 75008 Paris (FR)
(72) Inventor: Bonn, Heiko, 71638 Ludwigsburg (DE)
(74) Representative: Brose, Gerhard

(57) **Abstract**

The invention relates to a connection unit for connecting at least two subscribers to at least two different telecommunication's networks, where the connection unit comprises a housing (H) with at least two separate compartments (CP1, ..., CP5), and that the connection unit is arranged such that at least two of the separate compartments (CP1, ..., CP5) can be opened separately (CV1, ..., CV5).

## Description

The invention relates to a connection unit for connecting at least two subscribers to at least two different telecommunication's networks according to the preamble of claim 1.

More and more broadband connections are being installed using the FTTB technique (FTTB = fiber to the building). In a first phase mainly multiple dwelling units are connected. Optical fibers normally are installed ending in the basements of the respective buildings. There a connection to already existing telecommunication's equipment, especially telephone access lines, is made. To this end sometimes a couple of devices is mounted at a wall, some of them also need to be connected to the mains, nowadays often by means of wall plug transformers.

One problem here is the acceptance of the landlords.

Another problem lies in the fact that the whole installation has to be performed on site and thus necessarily needs skilled personal.

It is an object of the invention to create the prerequisites for reducing the influence of the above-mentioned problems.

According to the invention this is done by means of a connection unit according to the invention.

The idea is to provide a common housing for the equipment of a number of telecommunication's services ensuring the separation of different network operator's equipment.

Further embodiments of the invention are to be found in the subclaims and in the following description.

In the following the invention will be described with the aid of the accompanying drawing.

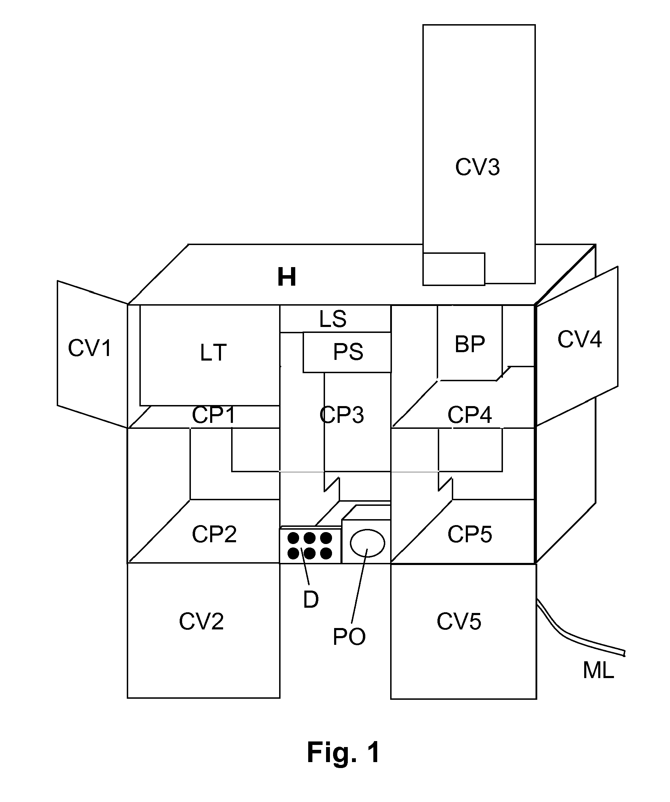

Figure 1 shows a rough view of an embodiment of a connection unit according to the invention.

Figure 1 shows a housing H divided into separate compartments CP1, CP2, CP3, CP4, and CP5. Each of these compartments has its own cover CV1, CV2, CV3, CV4, and CV5. The compartments are all shown in an open status, with the covers folded sideward, CV1, and CV4, or downward, CV2, and CV5, or being set aside, CV3.

It is not absolutely necessary that each compartment has its own cover, but at least those operators who want to separate their equipment should have such opportunity. Also it is a wish to prevent one subscriber from accessing the traffic of an other subscriber. The way of shutting up the compartments may depend on the demands of the respective users thereof. It may be made simply by screws, by keys, or by seals. And not each compartment needs to have a cover at all.

A highly recommended further development is some kind of junction unit being present between at least two of the separate compartments to provide connections between line terminals to be inserted into these compartments.

To allow such junction unit the internal bases and the internal walls show recesses at the rear end and a back panel BP is mounted at the rear side to act as such junction unit. It is clear that the housing needs suitable openings for entering cables and the like and that also the internal walls and internal bases need such openings. For ensuring the separation of the compartments it is not necessary, that the internal walls and internal bases have to reach the rear side at all.

The term "line terminal" here shall be understood as any kind of termination of whatever transmission path.

Preferably at least one of such line terminals is preassembled.

In order for increasing the acceptance by the operators, in addition some aids for the technical staff, like a power outlet PO, for example for a soldering iron, a light source LS, and display elements D may be foreseen, here shown in the middle compartment CP3. Preferably in this compartment also a power supply PS for those line terminals that need it, is foreseen and connected to the back panel BP. With this there remains only a need for connecting one single mains lead ML to the power supply system, even avoiding the need for any wall plug transformer.

It is recommended to leave a transparent area in the cover CV3 of this compartment to read the display D without removing this cover.

Examples of such line terminals are:
A distribution panel for telephone access lines.

A unit for receiving at least one optical access line including the means for receiving excess length of the fiber or fibers.

A unit for receiving at least one optical subscriber line including the means for receiving excess length of the fiber or fibers.

A terminal to a coaxial distribution network as often already present for TV distribution.

A terminal to a wireless local network either including a suitable antenna or a connector therefor. The cover of the respective compartment could be of non-isolating material.

A terminal to a wireline in-house broadband distribution network, like an Ethernet.

## Claims

1. Connection unit for connecting at least two subscribers to at least two different telecommunication's networks, **characterized in, that** the connection unit comprises a housing (H) with at least two separate compartments (CP1, ..., CP5), and that the connection unit is arranged such that at least two of the separate compartments (CP1, ..., CP5) can be opened separately (CV1, ..., CV5).

2. Connection unit according to claim 1, **characterized in, that** a junction unit (BP) is present between at least two of the separate compartments (CP1, ... , CP5), apt to provide connections between line terminals (LT) to be inserted into these compartments (CP1, ... , CP5).

3. Connection unit according to claim 2, **characterized in, that** in at least one compartment (CP1) a line terminal (LT) is preassembled.

4. Connection unit according to claim 1, **characterized in, that** aids for the technical staff, like power outlets (PO), illuminants (LS) or display elements (D), are integrated into the housing (H).

5. Connection unit according to claim 1, **characterized in, that** the connection unit (BP) presents a mains lead (ML) for connecting to the power supply system, and that in at least one of the compartments a power supply (PS) is present.

6. Connection unit according to claim 1, **characterized in, that** in at least one of the compartments (CP1, ... , CP5) a distribution panel for telephone access lines is present.

7. Connection unit according to claim 1, **characterized in, that** at least one of the compartments (CP1, ... , CP5) is adapted to receive at least one optical access line.

8. Connection unit according to claim 1, **characterized in, that** at least one of the compartments (CP1, ... , CP5) is adapted to receive at least one optical subscriber line.

9. Connection unit according to claim 1, **characterized in, that** in at least one of the compartments (CP1, ... , CP5) a terminal to a coaxial distribution network is present.

10. Connection unit according to claim 1, **characterized in, that** in at least one of the compartments (CP1, ... , CP5) a terminal to a wireless local network is present.
